# EUROPEAN PATENT APPLICATION

(11) **EP 4 156 533 A1**
(43) Date of publication of application: **29.03.2023**
(21) Application number: 20939151.5
(22) Date of filing: 04.06.2020
(51) Int. Cl.: H04B 5/00

(54) **BACKSCATTER TRANSMITTER AND SIGNAL TRANSMISSION METHOD**

(71) Applicant: GUANGDONG OPPO MOBILE TELECOMMUNICATIONS CORP., LTD., Dongguan, Guangdong 523860 (CN)
(72) Inventor: SHAO, Shuai, Dongguan, Guangdong 523860 (CN)
(74) Representative: Taor, Simon Edward William
(86) International application number: PCT/CN2020/094449
(87) International publication number: WO 2021/243661

(57) **Abstract**

Disclosed in the present application are a backscatter transmitter and a signal transmission method, relating to the field of mobile communication. The backscatter transmitter comprises a processor, a receiving antenna, a transmitting antenna, and a keying switch; the processor is used for controlling the connection path between the receiving antenna and the transmitting antenna by means of controlling the keying switch; the receiving antenna is used for receiving a first radio frequency signal; the connection path is used for modulating the phase of the first radio frequency signal to obtain a modulated second radio frequency signal; and the transmitting antenna is used for transmitting the second radio frequency signal. Thus, provided is a novel backscatter transmitter that does not require the arrangement of a mixer and is capable of implementing modulation of the phase of a radio frequency signal by means of only the connection path between the receiving antenna and the transmitting antenna; the structure is simple, the implementation principles are simple, and there is no need for excessive power consumption. The processor can adjust the connection path between the receiving antenna and the transmitting antenna by means of controlling the keying switch, being highly flexible.

## Description

### TECHNICAL FIELD

The present disclosure relates to the field of mobile communication, in particular to a backscatter transmitter and a signal transmission method.

### BACKGROUND

Nowadays, the backscattering technology can use the transmitter to generate the transmitted signal by modulating the received signal, and communicate with other devices using the transmitted signal, without actively transmitting signal.

In related technologies, signal modulation methods mainly include three modulation methods of ASK (Amplitude Shift Keying), FSK (Frequency Shift Keying), and PSK (Phase Shift Keying), and a main modulation method in PSK is to use a mixer to realize BPSK (Binary Phase shift keying) modulation. A mixer is provided in the backscattering device using BPSK modulation. The backscattering device needs to generate a high-frequency signal first, and then use the mixer to modulate the high-frequency signal with the received radio frequency signal to generate a modulated signal, due to the complex structure of the mixer, the structure of the backscatter transmitter is complex and the power consumption is high.

### SUMMARY

The embodiment of the present application provides a backscatter transmitter and a signal transmission method. The phase modulation of the radio frequency signal can be realized simply by the connection path between thee receiving antenna and the transmitting antenna without the need of mixer. The structure is simple, the implementation principle is simple, and no excessive power consumption is required. The technical scheme is as follows:
According to one aspect of the present application, a backscatter transmitter is provided, and the backscatter transmitter includes: a processor, a receiving antenna, a transmitting antenna, and a keying switch;
The processor, the receiving antenna, and the transmitting antenna are respectively connected to the keying switch;
The processor is configured to control the connection path between the receiving antenna and the transmitting antenna by controlling the keying switch;
The receiving antenna is configured to receive a first radio frequency signal;
The connection path is configured to modulate a phase of the first radio frequency signal to obtain a second radio frequency signal that is modulated;
The transmitting antenna is configured to transmit the second radio frequency signal.

According to one aspect of the present application, a signal transmission method is provided, which is applied to a backscatter transmitter, and the backscatter transmitter includes: a processor, a receiving antenna, a transmitting antenna, and a keying switch; the processor is connected to the key swatch, and the receiving antenna and the transmitting antenna are respectively connected to the keying switch; the method also includes:
controlling, by the processor, a connection path between the receiving antenna and the transmitting antenna by controlling the keying switch;
receiving, by the receiving antenna, a first radio frequency signal;
configuring the connection path to modulate a phase of the first radio frequency signal to obtain a second radio frequency signal that is modulated; and
transmitting, by the transmitting antenna, the second radio frequency signal.

The technical solutions provided by the embodiments of the present application at least include the following beneficial effects:
In the novel backscatter transmitter provided by the embodiment of the present application, the backscatter transmitter includes a processor, a receiving antenna, a transmitting antenna, and a keying switch. The processor controls the connection path between the receiving antenna and the transmitting antenna by controlling the keying switch. The receiving antenna receives the first radio frequency signal, and transmits it to the transmitting antenna through the connection path, during the transmission process, the connection path realizes the modulation of the phase of the first radio frequency signal, and obtains the modulated second radio frequency signal. The second radio frequency signal is transmitted by the transmitting antenna. The phase modulation of the radio frequency signal can be realized only through the connection path between the receiving antenna and the transmitting antenna without providing a mixer. The structure is simple, and the realization principle is simple, and excessive power consumption is no longer required. Moreover, the processor can adjust the connection path between the receiving antenna and the transmitting antenna by controlling the keying switch, which has strong flexibility.

### BRIEF DESCRIPTION OF THE DRAWINGS

In order to more clearly illustrate the technical solutions in the embodiments of the present application, the drawings that need to be used in the description of the embodiments will be briefly introduced below. Obviously, the drawings in the following description are only some embodiments of the present application. For those skilled in the art, other drawings can also be obtained based on these drawings without creative effort.
FIG. 1 illustrates a schematic diagram of a backscattering technique provided by an exemplary embodiment of the present application;
FIG. 2 illustrates schematic diagram of a communication system provided by an exemplary embodiment of the present application;
FIG. 3 illustrates schematic diagram of a communication system provided by an exemplary embodiment of the present application;
FIG. 4 illustrates schematic structural diagram of a backscatter transmitter provided by an exemplary embodiment of the present application;
FIG. 5 illustrates a constellation diagram of BPSK provided by an exemplary embodiment of the present application;
FIG. 6 illustrates a schematic diagram of the relationship between the digital domain and the waveform provided by an exemplary embodiment of the present application;
FIG. 7 illustrates a schematic structural diagram of a backscatter transmitter provided by an exemplary embodiment of the present application;
FIG. 8 illustrates a schematic structural diagram of a backscatter transmitter provided by an exemplary embodiment of the present application;
FIG. 9 illustrates a schematic structural diagram of an integrated energy harvesting device provided by an exemplary embodiment of the present application;
FIG. 10 illustrates a schematic structural diagram of a backscatter transmitter provided by an exemplary embodiment of the present application; and
FIG. 11 illustrates a signal transmitting method provided by an exemplary embodiment of the present application.

### DETAILED DESCRIPTION

In order to make the purpose, technical solution and advantages of the present application clearer, the implementation manners of the present application will be further described in detail below in conjunction with the accompanying drawings.

First, a brief introduction to the terms involved in the embodiments of this application.
1. Backscattering technology: it is a wireless technology that realizes signal transmission and encoding without an active transmitter. It also refers to the wireless technology that uses the transmitter to modulate the received signal, and transmit the modulated signal, without actively generating and transmitting signals.

For example, when the electromagnetic wave reaches the surface of an object, some of the electromagnetic wave will be reflected by the object, and the strength of the reflected signal depends on the shape, material and distance of the object. It can be understood that each object has RCS (Radar Cross Section). In the backscatter system, the electronic tag implements encoding of the signal by changing the RCS, wherein the electronic tag can be the backscatter transmitter in this application.

The backscatter technique is now illustrated by way of example.

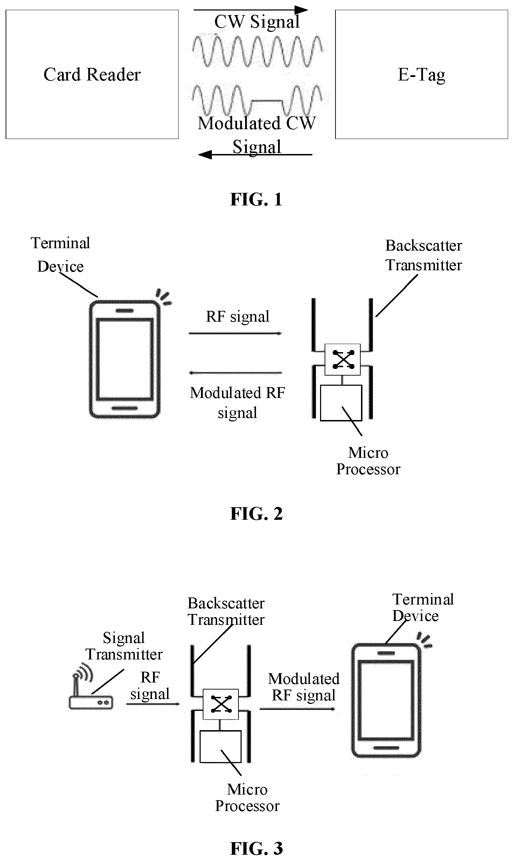

As shown in FIG. 1, the card reader can transmit a CW (Continuous Wave) signal to the electronic tag, and the electronic tag modulates the received CW signal by switching the matching impedance frequency of the antenna to obtain the modulated CW signal, the modulated CW signal is an encoded signal, and the modulated CW signal is transmitted to the card reader to determine the information carried in the modulated CW signal.

Since the electronic tag does not actively generate signals, but only modulates the received signal, the electronic tag realizes the function of the transmitter, thus reducing the power consumption for generating the signal by the transmitter, and the transmitter can absorb the radio frequency energy of the received signal radio, and then converts it into electric energy, so the transmitter does not need to contain a battery, thereby achieving the purpose of zero power consumption.

In addition, FIG. 2 illustrates a schematic diagram of a communication system provided by an exemplary embodiment of the present application. Referring to FIG. 2, the communication system includes a terminal device and a backscatter transmitter.

In this example, the terminal device is integrated with a signal transmitter, and the terminal device can transmit a radio frequency signal through the signal transmitter, and after receiving the radio frequency signal, the backscatter transmitter can modulate the radio frequency signal to obtain a modulated radio frequency signal, and then transmit the modulated radio frequency signal, and the terminal device receives the modulated radio frequency signal.

FIG. 3 illustrates schematic diagram of a communication system provided by another exemplary embodiment of the present application. Referring to FIG. 3, the communication system includes a terminal device, a signal transmitter and a backscatter transmitter.

In this example, the signal transmitter is configured to transmit a radio frequency signal, and after receiving the radio frequency signal, the backscatter transmitter can modulate the radio frequency signal to obtain a modulated radio frequency signal, and then transmit the modulated radio frequency signal, and the terminal device receives the modulated radio frequency signal.

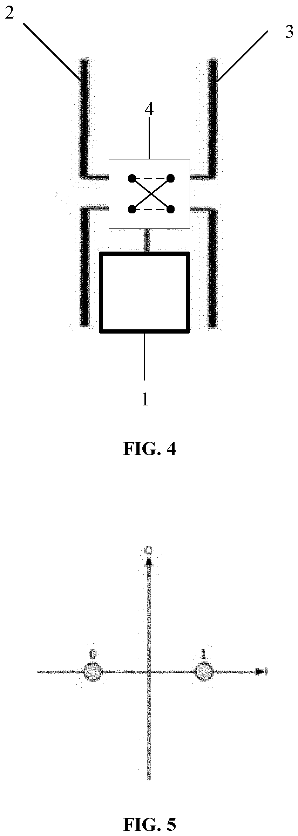

FIG. 4 illustrates a schematic structural view of a backscatter transmitter provided by an exemplary embodiment of the present application. Referring to FIG. 4, the backscatter transmitter includes: a processor 1, a receiving antenna 2, a transmitting antenna 3 and a keying switch 4.

The backscattering transmitter can adopt the backscattering technology to receive the radio frequency signal, then modulate the radio frequency signal, and transmit the modulated radio frequency signal, and the backscattering transmitter does not need to use a battery, which can save power consumption.

In a possible implementation, the backscatter transmitter provided by the embodiment of the present application adopts the BPSK modulation mode, and adjusts the phase of the received radio frequency signal so that the phase-adjusted radio frequency signal can represent the code information "0" or code information "1".

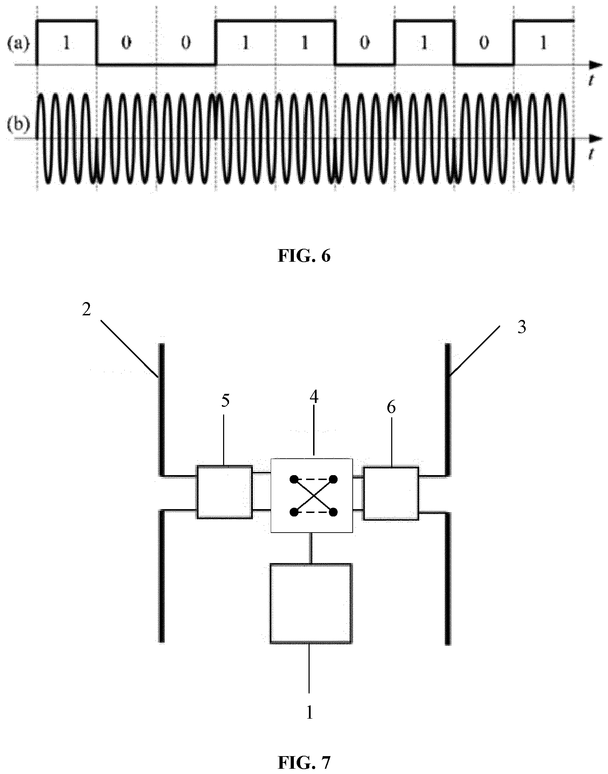

For example, FIG. 5 is a constellation diagram of BPSK. Refer to FIG. 5, in the BPSK modulation mode, two signals with the same amplitude and a phase difference of 180 degrees are placed at position 0 and position 1. In addition, FIG. 6 is a comparison diagram of digital domain encoding and signal waveforms of BPSK. Referring to FIG. 6, the low voltage and high voltage in the digital domain represent the code information "0" and "1" respectively, and there are corresponding matching waveforms, and the phase difference between the waveform corresponding to "0" and the waveform corresponding to "1" is 180 degrees.

The backscatter transmitter in the embodiment of the present application can control the phase difference between the signal of the receiving antenna 2 and the signal of the transmitting antenna 3 by controlling the connection path between the receiving antenna 2 and the transmitting antenna 3. When the radio frequency signal is received by the receiving antenna 2, and then transmitted by the transmitting antenna 3, the phase of the radio frequency signal can be kept unchanged or the phase of the radio frequency signal can be adjusted by 180 degrees. Since the backscatter transmitter provided by the embodiment of the present application can keep the phase of the received radio signal constant or adjust the phase of the radio frequency signal by 180 degrees, when the phase of the radio frequency signal is kept constant, the radio frequency signal transmitted by the transmitting antenna 3 can represent a code "0", and when the phase of the radio frequency signal is adjusted by 180 degrees, the radio frequency signal transmitted by the transmitting antenna 3 can represent a code "1".

In this example, the processor 1, the receiving antenna 2, and the transmitting antenna 3 in the backscatter transmitter are respectively connected to the keying switch 4.

The receiving antenna 2 is used for receiving the first radio frequency signal. The backscatter transmitter provided in the embodiment of the present application can modulate the first radio frequency signal received by the receiving antenna 2 to obtain a modulated second radio frequency signal.

The first radio frequency signal may be emitted by a card reader, or by a signal transmitter, or by other devices capable of emitting signals.

In a possible implementation manner, the first radio frequency signal may be a CW radio frequency signal, or a signal of another type. When the first radio frequency signal is a CW radio frequency signal, the CW radio frequency signal is transmitted by a CW transmitter, and the CW transmitter is used to generate a CW radio frequency signal and transmit the CW radio frequency signal.

The processor 1 is configured to control the connection path between the receiving antenna 2 and the transmitting antenna 3 by controlling the keying switch 4, the connection path can modulate the phase of the first radio frequency signal to obtain a modulated second radio frequency signal, and the transmitting antenna 3 is used to transmit the second radio frequency signal.

In a possible implementation manner, the keying switch controls the positive pole of the receiving antenna 2 to be connected to the positive pole of the transmitting antenna 3, and the negative pole of the receiving antenna 2 to be connected to the negative pole of the transmitting antenna 3to ensure that the phases are the same.

In another possible implementation, the positive pole of the receiving antenna 2 is connected to the negative pole of the transmitting antenna 3, and the negative pole of the receiving antenna 2 is connected to the positive pole of the transmitting antenna 3 to ensure a phase difference of 180 degrees.

Before controlling the keying switch 4, the processor 1 first determines the code information represented by the second radio frequency signal to be transmitted. After determining the currently required code information, it can control the keying switch 4, and control the connection path between the receiving antenna 2 and the transmitting antenna3, then the receiving antenna 2 can transmit the radio frequency signal carrying the code information.

In a possible implementation, the keying switch 4 is a double-pole double-throw switch, or other types of switches.

It should be noted that the keying switch 4 has an initial state. When the processor 1 controls the keying switch 4 and controls the connection path between the receiving antenna 2 and the transmitting antenna 3, the initial state of the current keying switch 4 is first judged. If the control switch 4 meets the connection path of receiving antenna 2 and transmitting antenna 3, then the state of keying switch 4 is not changed, and if the control switch 4does not meet the connection path of receiving antenna 2 and transmitting antenna 3, the keying switch 4 is adjusted to another state.

For example, when the information that processor 1 needs to send is "110011 ", when the first character "1" is transmitted, the processor 1 controls the keying switch 4, to control that the positive pole of receiving antenna 2 is connected with the positive pole of transmitting antenna 3, and the negative pole of the receiving antenna 2 is connected with the negative pole of the transmitting antenna 3, so that the signal of the receiving antenna 2 and the signal of the transmitting antenna 3 are in the same phase. When the second character "1" is transmitted, the processor 1 does not trigger the control of the keying switch 4.When the third character "0" is transmitted, because it is different from the previous character "1", the control of the keying switch 4 is triggered to control that the positive pole of the receiving antenna 2 is connected with the negative pole of the transmitting antenna 3, and the negative pole of the receiving antenna 2 is connected with the positive pole of the transmitting antenna 3, so that the signal of the receiving antenna 2 and the signal of the transmitting antenna 3 are in opposite phases. When the fourth character "0" is transmitted, the processor 1 does not trigger the control of the keying switch 4. When the fifth character "1" is transmitted, because it is different from the previous character "0", the control of the keying switch 4 is triggered to continue to control the signal of the receiving antenna 2 and the signal of the transmitting antenna 3 are in the same phase. When the sixth character "1" is transmitted, the processor 1 does not trigger the control of the keying switch 4.

In a possible implementation manner, the transmitting antenna 3 in the embodiment of the present application is any one of a patch antenna and a dipole antenna.

In another possible implementation manner, the receiving antenna 2 in the embodiment of the present application is any one of a patch antenna and a dipole antenna.

It should be noted that, when the transmitting antenna 3 and the receiving antenna 2 in the embodiment of the present application are both patch antennas, the transmitting antenna 3 and the receiving antenna 2 cannot adopt a common ground structure.

In addition, the backscatter transmitter provided by the embodiment of the present application can be applied in more wireless transmission protocols, for example, it can be applied in Bluetooth technology, or it can be applied in Wi -Fi (Wireless Fidelity) technology, or in the cellular network, or in the RFID (Radio Frequency ID entification) technology and the like.

In the novel backscatter transmitter provided by the embodiment of the present application, the backscatter transmitter includes a processor, a receiving antenna, a transmitting antenna, and a keying switch. The processor controls the connection patch between the receiving antenna and the transmitting antenna by controlling the keying switch. The receiving antenna receives the first radio frequency signal, and transmits it to the transmitting antenna through the connection patch, during the transmission process, the connection patch realizes the modulation of the phase of the first radio frequency signal, and obtains the modulated second radio frequency signal. The second radio frequency signal is transmitted by the transmitting antenna. The phase modulation of the radio frequency signal can be realized only through the connection path between the receiving antenna and the transmitting antenna without providing a mixer. The structure is simple, and the realization principle is simple, and excessive power consumption is no longer required. Moreover, the processor can adjust the connection path between the receiving antenna and the transmitting antenna by controlling the keying switch, which has strong flexibility.

In a possible implementation, the backscatter transmitter also includes a first matching network module 5, the first matching network module 5 is located between the receiving antenna 2 and the keying switch 4, and the first matching network module 5 is connected to the receiving antenna 2 and the keying switch 4, respectively.

In this example, the first matching network module 5 is configured to adjust the impedance of the first radio frequency signal, so that the adjusted impedance of the first radio frequency signal matches the impedance of the keying switch 4.

In the embodiment of the present application, since the receiving antenna 2 and the keying switch 4 in the backscatter transmitter both have impedances, if the impedances of the receiving antenna 2 and the keying switch 4 are different, when the first radio frequency received by the receiving antenna reaches the keying switch 4, it will cause the attenuation of the first radio frequency signal, and the maximum energy efficiency cannot be achieved. Therefore, between the receiving antenna 2 and the keying switch 4, a first matching network module 5 is provided. The first matching network module 5 is used to adjust the impedance of the first radio frequency signal, so that the adjusted impedance of the first radio frequency signal matches the impedance of the keying switch 4 to ensure the transmission of the radio frequency signal.

Moreover, after the first matching network module 5 is provided between the receiving antenna 2 and the keying switch 4, the connection path between the receiving antenna 2 and the transmitting antenna 3 includes the first matching network module 5 and the keying switch 4.

In another possible implementation, the backscatter transmitter further includes a second matching network module 6, the second matching network module 6 is located between the transmitting antenna 3 and the keying switch 4, and the second matching network module 6 is connected with transmitting antenna 3 and the keying switch 4, respectively.

The second matching network module 6 is configured to adjust the impedance of the second radio frequency signal, so that the adjusted impedance of the second radio frequency signal matches the impedance of the transmitting antenna 3.

In this example, the principle of the second matching network module 6 is similar to that of the first matching network module, and description will not be repeated here.

Moreover, after the second matching network module 6 is provided between the receiving antenna 2 and the keying switch 4, the connection path between the receiving antenna 2 and the transmitting antenna 3 includes the second matching network module 6 and the keying switch 4.

For example, as shown in FIG. 7, a first matching network module 5 is provided between the receiving antenna 2 and the keying switch 4, and a second matching network module 6 is provided between the keying switch 4 and the transmitting antenna 3. The backscatter transmitter in the embodiment can use the first matching network module 5 and the second matching network module 6 to adjust the first radio frequency signal and the second radio frequency signal respectively, so that the impedance of the adjusted radio frequency signal match. It should be noted that after the first matching network module 5 is provided between the receiving antenna 2 and the keying switch 4, and the second matching network module 6 is provided between the keying switch 4 and the transmitting antenna 3, the connection path between the receiving antenna 2 and the transmitting antennas 3 includes the first matching network module 5, the second matching network module 6 and the keying switch 4.

The backscatter transmitter provided in the embodiment of the present application can adjust the impedance of the radio frequency signal in the backscatter transmitter by providing the first matching network module and the second matching network module, so as to ensure that the radio frequency signal reaches the maximum power transmission, improving the performance of backscatter transmitters.

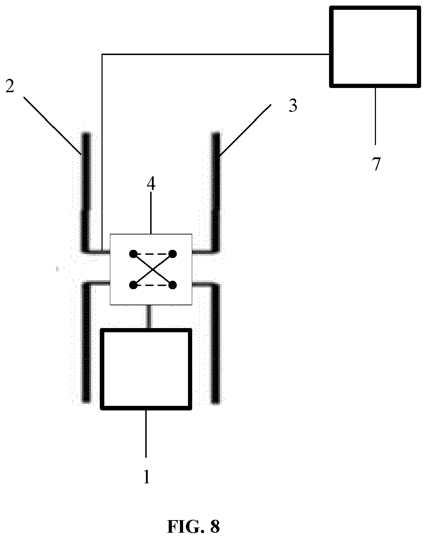

In another possible implementation manner, as shown in FIG. 8, the backscatter transmitter further includes an integrated energy harvesting device 7, and the integrated energy harvesting device 7 is connected to the receiving antenna 2.

In this example, the integrated energy harvesting device 7 is configured to receive the radio frequency energy of the first radio frequency signal, convert the radio frequency energy into electric energy and store it.

After the receiving antenna 2 receives the first radio frequency signal, the first radio frequency signal contains radio frequency energy, thus the radio frequency energy of the first radio frequency signal can be converted into electric energy through the provided integrated energy harvesting device 7.

In this example, the first radio frequency signal has a sinusoidal waveform, so the first radio frequency signal is an AC signal, if the radio frequency energy of the first radio frequency signal needs to be converted into electric energy, the integrated energy harvesting device 7 needs to be configured to convert the AC signal into DC signal, and then the energy of the DC signal can be obtained as electric energy.

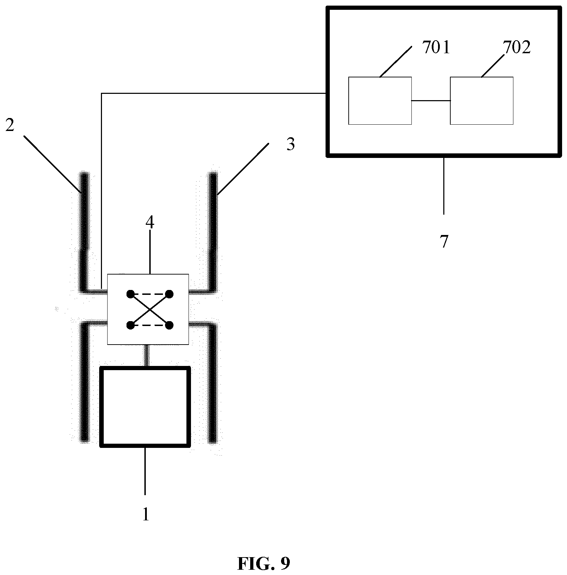

Optionally, as shown in FIG. 9, the integrated energy harvesting device 7 includes a rectifier 701 and an energy storage 702, and the rectifier 701 is connected to the receiving antenna 2 and the energy storage 702 respectively.

In this example, the rectifier 701 is used to receive the radio frequency energy of the first radio frequency signal, and convert the radio frequency energy into electric energy. Then the electric energy is sent to the energy storage 702, and the energy storage 702 stores the electric energy.

The rectifier 701 can rectify the received signal, and can also boost the voltage of the rectified signal, so that the subsequent process can obtain a signal that meets the requirements, and then obtain the power.

In this example, the rectifier 701 may be a voltage multiplier, or other devices.

The integrated energy harvesting device provided in the embodiment of the present application can convert the radio frequency energy of the first radio frequency signal into electric energy and store the electric energy, so the backscatter transmitter can use the electric energy stored in the integrated energy harvesting device without providing a battery for the backscatter transmitter, thereby saving power consumption and improving energy utilization.

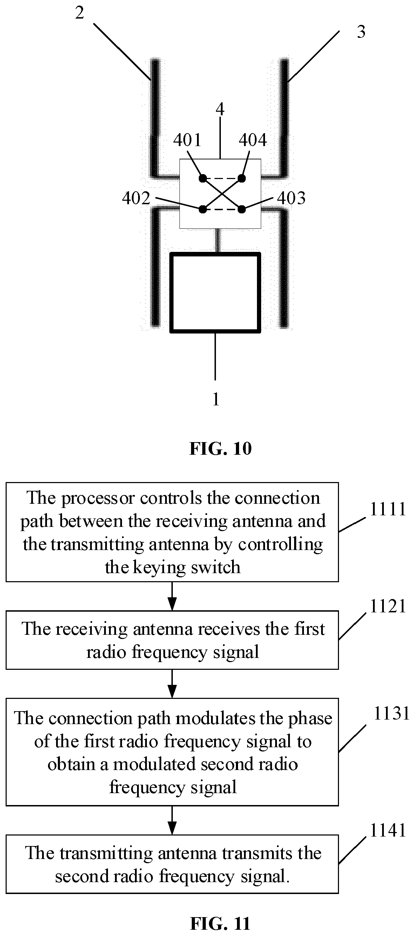

In another possible implementation, as shown in FIG. 10, the keying switch 4 includes a first contact point 401, a second contact point 402, a third contact point 403, and a fourth contact point 404. The first contact point 401 and the second contact point 402 are all located on the receiving antenna 2, the third contact point 403 and the fourth contact point 404 are all located on the transmitting antenna 3. The first contact point 401 and the third contact point 403 are positive poles, and the second contact point 402 and the fourth contact point 404 are negative poles.

The keying switch 4 is configured to connect the first contact point 401 and the third contact point 403, and connect the second contact point 402 and the fourth contact point 404 to form a connection path between the receiving antenna 2 and the transmitting antenna 3. In this case, the positive pole of receiving antenna 2 is connected with the positive pole of transmitting antenna 3, and the negative pole of receiving antenna 2 is connected with the negative pole of transmitting antenna 3. In this case, the receiving antenna 2 is in the same phase with transmitting antenna 3. After receiving antenna 2 receives the first radio frequency signal, it is transmitted to the transmitting antenna through the connection path. During the transmission process, the modulation of the first radio frequency signal is realized, and the second radio frequency signal transmitted by the transmitting antenna 3 is in the same phase with the first radio frequency signal.

Alternatively, the keying switch4 is configured to connect the first contact point 401 to the fourth contact point 404, connect the second contact point 402 to the third contact point 403, and form a connection path between the receiving antenna 2 and the transmitting antenna 3. In this case, the positive pole of the receiving antenna 2 is connected to the negative pole of the transmitting antenna 3, and the negative pole of the receiving antenna 2 is connected to the positive pole of the transmitting antenna 3. In this case, the receiving antenna 2 and the transmitting antenna 3 are in opposite phases, and after the receiving antenna 2 receives the first radio frequency signal, it is transmitted to the transmitting antenna through the connection path. During the transmission process, the modulation of the first radio frequency signal is realized, and the second radio frequency signal transmitted by the transmitting antenna 3 is in the opposite phase to the first radio frequency signal.

Through the above method, when the processor 1 determines that the second radio frequency signal to be transmitted is in the same phase with the first radio frequency signal, the processor 1 controls the keying switch 4 to connect the first contact point 401 to the third contact point 403, and connect the second contact point 402 to the fourth contact point 404, so the first radio frequency signal of the transmitting antenna 3 and the second radio frequency signal of the receiving antenna 2 have the same phase.

When the processor 1 determines that the second radio frequency signal to be transmitted is in the opposite phase to the first radio frequency signal, the processor 1 controls the keying switch 4 to connect the first contact point 401 to the fourth contact point 404, and the second contact point 402 to the third contact point 403, so the first radio frequency signal of the transmitting antenna 3 and the second radio frequency signal of the receiving antenna 2 are in opposite phases.

In the backscatter transmitter provided by the embodiment of the present application, the keying switch includes a first contact point, a second contact point, a third contact point and a fourth contact point. Both the first contact point and the second contact point are located at the receiving antenna, and both the third contact point and the fourth contact point are located on the transmitting antenna. The first contact point and the third contact point are positive poles, and the second contact point and the fourth contact point are negative poles. The positive poles and the negative poles of the receiving antenna and the transmitting antenna can be adjusted by the keying switch. By adjusting the connection path between the positive and negative poles of the receiving antenna and the transmitting antenna, the RF signal of the receiving antenna and the RF signal of the transmitting antenna can be in the same phase or different phases, that is, modulation of the radio frequency signal is realized, and then the backscattering technology is realized.

FIG. 11 is a flow chart of a signal transmission method provided by an exemplary embodiment of the present application. Referring to FIG. 11, it is applied to a backscatter transmitter, and the backscatter transmitter includes: a processor, a receiving antenna, a transmitting antenna and a keying switch; the processor is connected to the keying switch, and the receiving antenna and the transmitting antenna are respectively connected to the keying switch; the method also includes:
Step 1111. The processor controls the connection path between the receiving antenna and the transmitting antenna by controlling the keying switch.
Step 1121. The receiving antenna receives the first radio frequency signal.
Step 1131. The connection path modulates the phase of the first radio frequency signal to obtain a modulated second radio frequency signal.
Step 1141. The transmitting antenna transmits the second radio frequency signal.

The method provided in the embodiment of the present application is applied to a backscatter transmitter. The backscatter transmitter includes a processor, a receiving antenna, a transmitting antenna, and a keying switch to control the connection path between the receiving antenna and the transmitting antenna. The antenna receives the first radio frequency signal, and transmits it to the transmitting antenna through the connection path. During the transmission process, the connection path realizes the phase modulation of the first radio frequency signal, and obtains the modulated second radio frequency signal, which is transmitted by the transmitting antenna. The phase modulation of the radio frequency signal can be realized only through the connection path between the receiving antenna and the transmitting antenna without providing a mixer. The structure is simple, and the realization principle is simple, and excessive power consumption is no longer required. Moreover, the processor can adjust the connection path between the receiving antenna and the transmitting antenna by controlling the keying switch, which has strong flexibility.

In a possible implementation manner, the backscatter transmitter further includes a first matching network module; the first matching network module is located between the receiving antenna and the keying switch, and the first matching network module is connected to the receiving antenna and the keying switch respectively. The method also includes:
The first matching network module adjusts the impedance of the first radio frequency signal, so that the adjusted impedance of the first radio frequency signal matches the impedance of the keying switch.

In another possible implementation, the backscatter transmitter further includes a second matching network module; the second matching network module is located between the transmitting antenna and the keying switch, and the second matching network module is connected to the transmitting antenna and the keying switch respectively. The method also includes:
The second matching network module adjusts the impedance of the second radio frequency signal, so that the adjusted impedance of the second radio frequency signal matches the impedance of the transmitting antenna.

In another possible implementation, the backscatter transmitter also includes an integrated energy harvesting device; the integrated energy harvesting device is connected to the receiving antenna; and the method also includes:

The integrated energy harvesting device receives the radio frequency energy of the first radio frequency signal, converts the radio frequency energy into electric energy and stores it.

In another possible implementation, the integrated energy harvesting device includes a rectifier and an energy storage; the rectifier is respectively connected to the receiving antenna and the energy storage; the integrated energy harvesting device receives the radio frequency energy of the first radio frequency signal, converts the radio frequency energy into electric energy and stores it, which includes:
The rectifier receives the radio frequency energy of the first radio frequency signal, and converts the radio frequency energy into electric energy;

The energy storage stores the electric energy.

In another possible implementation manner, the keying switch includes a first contact point, a second contact point, a third contact point, and a fourth contact point; both the first contact point and the second contact point are located on the receiving antenna, and both the third contact point and the fourth contact point are located on the transmitting antenna, the first contact point and the third contact point are positive poles, and the second contact point and the fourth contact point are negative poles. The method also includes:

The processor controls the keying switch to connect the first contact point with the third contact point and connect the second contact point with the fourth contact point to form a connection path, and the first radio frequency signal of the transmitting antenna and the second radio frequency signal of the receiving antenna are in the same phase.

When the processor controls the keying switch to connect the first contact point with the fourth contact point and connect the second contact point with the third contact point to form the connection path, the first radio frequency signal of the transmitting antenna and the second radio frequency signal of the receiving antenna are in opposite phase.

In another possible implementation manner, the transmitting antenna is any one of a patch antenna and a dipole antenna.

In another possible implementation manner, the receiving antenna is any one of a patch antenna and a dipole antenna.

In another possible implementation manner, the first radio frequency signal is a CW signal.

Those of ordinary skill in the art can understand that all or part of the steps of the above embodiments can be implemented by hardware, and can also be implemented by instructing related hardware through a program. The program can be stored in a computer-readable storage medium. The above-mentioned storage medium mentioned may be a read-only memory, a magnetic disk or an optical disk, and the like.

The above are only optional embodiments of the application, and are not intended to limit the application. Any modifications, equivalent replacements, improvements, etc. made within the spirit and principles of the application shall be included in the protection scope of the application.

## Claims

1. A backscatter transmitter, wherein the backscatter transmitter comprises: a processor (1), a receiving antenna (2), a transmitting antenna (3) and a keying switch (4);
the processor (1), the receiving antenna (2), and the transmitting antenna (3) are respectively connected to the keying switch (4);
the processor (1) is configured to control a connection path between the receiving antenna (2) and the transmitting antenna (3) by controlling the keying switch (4);
the receiving antenna (2) is configured to receive a first radio frequency signal;
the connection path is configured to modulate a phase of the first radio frequency signal to obtain a modulated second radio frequency signal; and
the transmitting antenna (3) is configured to transmit the second radio frequency signal.

2. The backscatter transmitter according to claim 1, wherein the backscatter transmitter further comprises a first matching network module (5);
the first matching network module (5) is disposed between the receiving antenna (2) and the keying switch (4), and the first matching network module (5) is connected to the receiving antenna (2) and the keying switch (4); and
the first matching network module (5) is configured to adjust an impedance of the first radio frequency signal, to match an adjusted impedance of the first radio frequency signal and an impedance of the keying switch (4).

3. The backscatter transmitter according to claim 1, wherein the backscatter transmitter further comprises a second matching network module (6);
the second matching network module (6) is disposed between the transmitting antenna (3) and the keying switch (4), and the second matching network module (6) is connected to the transmitting antenna (3) and the keying switch (4); and
the second matching network module (6) is configured to adjust an impedance of the second radio frequency signal, to match an adjusted impedance of the second radio frequency signal and an impedance of the transmitting antenna (3).

4. The backscatter transmitter according to claim 1, wherein the backscatter transmitter further comprises an integrated energy harvesting device (7);
the integrated energy harvesting device (7) is connected to the receiving antenna (2); and
the integrated energy harvesting device (7) is configured to receive radio frequency energy of the first radio frequency signal, convert the radio frequency energy into electric energy and store the electric energy.

5. The backscatter transmitter according to claim 4, wherein the integrated energy harvesting device (7) comprises a rectifier (701) and an energy storage (702);
the rectifier (701) is respectively connected to the receiving antenna (2) and the energy storage (702);
the rectifier (701) is configured to receive radio frequency energy of the first radio frequency signal, and convert the radio frequency energy into electric energy; and
the energy storage (702) is configured to store the electric energy.

6. The backscatter transmitter according to claim 1, wherein the keying switch (4) comprises a first contact point (401), a second contact point (402), a third contact point (403) and a fourth contact point (404);
both the first contact point (401) and the second contact point (402) are located on the receiving antenna (2), and both the third contact point (403) and the fourth contact point (404) are located on the transmitting antenna (3), the first contact point (401) and the third contact point (403) are positive poles, the second contact point (402) and the fourth contact point (404) are negative poles;
the processor (1) is configured to control the keying switch (4) to connect the first contact point (401) to the third contact point (403) and connect the second contact point (402) to the fourth contact point (404) to form the connection path, and the first radio frequency signal of the transmitting antenna (3) and the second radio frequency signal of the receiving antenna (2) are in same phase; and
the processor (1) is configured to control the keying switch (4) to connect the first contact point (401) to the fourth contact point (404) and connect the second contact point (402) to the third contact point (403) to form the connection path, and the first radio frequency signal of the transmitting antenna (3) and the second radio frequency signal of the receiving antenna (2) are in opposite phases.

7. The backscatter transmitter according to any one of claims 1-6, wherein the transmitting antenna (3) is any one of a patch antenna and a dipole antenna.

8. The backscatter transmitter according to any one of claims 1-6, wherein that the receiving antenna (2) is any one of a patch antenna and a dipole antenna.

9. The backscatter transmitter according to any one of claims 1-6, wherein the first radio frequency signal is a continuous wave CW signal.

10. A signal transmission method, applied to a backscatter transmitter, wherein the backscatter transmitter comprises: a processor, a receiving antenna, a transmitting antenna and a keying switch; the processor is connected to the keying switch, and the receiving antenna and the transmitting antenna are respectively connected to the keying switch; wherein the method comprises:
controlling, by the processor, a connection path between the receiving antenna and the transmitting antenna by controlling the keying switch;
receiving, by the receiving antenna, a first radio frequency signal;
modulating, by the connection path, a phase of the first radio frequency signal to obtain a modulated second radio frequency signal; and
transmitting, by the transmitting antenna, the second radio frequency signal.

11. The method according to claim 10, wherein the backscatter transmitter further comprises a first matching network module; the first matching network module is disposed between the receiving antenna and the keying switch, and the first matching network module is respectively connected to the receiving antenna and the keying switch; the method further comprises:
adjusting, by the first matching network module, an impedance of the first radio frequency signal, to match an adjusted impedance of the first radio frequency signal and an impedance of the keying switch.

12. The method according to claim 10, wherein the backscatter transmitter further comprises a second matching network module; the second matching network module is disposed between the transmitting antenna and the keying switch, and the second matching network module is respectively connected to the transmitting antenna and the keying switch; the method further comprises:
adjusting, by the second matching network module, an impedance of the second radio frequency signal, to match an adjusted impedance of the second radio frequency signal and an impedance of the transmitting antenna.

13. The method according to claim 10, wherein the backscatter transmitter further comprises an integrated energy harvesting device; the integrated energy harvesting device is connected to the receiving antenna; the method further comprises:
receiving, by the integrated energy harvesting device, radio frequency energy of the first radio frequency signal, converting the radio frequency energy into electric energy and storing the electric energy.

14. The method according to claim 11, wherein the integrated energy harvesting device comprises a rectifier and an energy storage; the rectifier is respectively connected to the receiving antenna and the energy storage; and receiving, by the integrated energy harvesting device, radio frequency energy of the first radio frequency signal, converting the radio frequency energy into electric energy and storing the electric energy comprising:
receiving, by the rectifier, radio frequency energy of the first radio frequency signal, and converting the radio frequency energy into electric energy; and
storing, by the energy storage, the electric energy.

15. The method according to claim 9, wherein the keying switch comprises a first contact point, a second contact point, a third contact point and a fourth contact point; both the first contact point and the second contact points are located on the receiving antenna, both the third contact point and the fourth contact point are located on the transmitting antenna, the first contact point and the third contact point are positive poles, and the second contact point and the fourth contact point are negative poles; the method further comprises:
controlling, by the processor, the keying switch to connect the first contact point with the third contact point, and connect the second contact point with the fourth contact point to form the connection path, and the first radio frequency signal of the transmitting antenna and the second radio frequency signal of the receiving antenna are in same phase; and
controlling, by the processor, the keying switch to connect the first contact point with the fourth contact point, and connect the second contact point with the third contact point to form the connection path, and the first radio frequency signal of the transmitting antenna and the second radio frequency signal of the receiving antenna are in opposite phases.

16. The method according to any one of claims 10-15, wherein the transmitting antenna is any one of a patch antenna and a dipole antenna.

17. The method according to any one of claims 10-15, wherein the receiving antenna is any one of a patch antenna and a dipole antenna.

18. The method according to any one of claims 10-15, wherein the first radio frequency signal is a continuous wave CW signal.
